# EUROPEAN PATENT SPECIFICATION

(11) **EP 2 959 491 B1**
(45) Date of publication and mention of the grant of the patent: **13.09.2017**
(21) Application number: 13707827.5
(22) Date of filing: 25.02.2013
(51) Int. Cl.: H01B 7/295, H02G 3/04

(54) **FIRE RESISTANT AND FLAME RETARDANT CABLE SYSTEM**
FEUERFESTES UND FLAMMHEMMENDES KABELSYSTEM
SYSTÈME DE CÂBLES RÉSISTANT AU FEU ET IGNIFUGE

(43) Date of publication of application: 30.12.2015
(73) Proprietor: Prysmian S.p.A., 20126 Milano (IT)
(72) Inventor: SARCHI, Davide, I-20126 Milano (IT); HEROLD, Eduard, I-20126 Milano (IT)
(74) Representative: Pietra, Giulia
(86) International application number: PCT/EP2013/053680
(87) International publication number: WO 2014/127839

(56) References cited:
- GB-A- 2 058 489
- US-A- 3 865 967

## Description

### Technical field

The present invention relates to the field of cables. In particular, the present invention relates to a fire resistant and flame retardant cable system comprising an electric cable, an optical cable or a hybrid optical/electrical cable.

### Background art

A fire resistant cable is a cable capable of resisting burning and withstanding heat for a time prescribed by international standards such as IEC 332-1 (1993), so that the cable may keep on operating with acceptable electrical and/or optical performance even in the presence of a fire which may raise the cable temperature to 800°C-900°C or more. A fire resistant cable is typically provided also with flame retardant properties, namely with the capability of inhibiting or minimizing the propagation of fire along its length. Fire resistance of a cable is typically measured as the cable resistance time, whereas its flame retardant properties are typically measured as the flame propagation distance.

Fire resistant cables are used for applications where the need to maintain circuit integrity is essential, for example in data communication centers, public buildings (hotels, cinemas, airports), underground stations and tunnels, marine and offshore. In such applications it is essential guaranteeing that some systems supplied by cables (e.g. lightings, sprinklers, self-closing doors, etc.) keep on operating for a certain time after a fire broke out, as provided e.g. by the SOLAS regulation "Safe return to port", Chapter II-2/21.4. This allows extinguishing the fire, evacuating the areas affected by fire and, possibly, bringing back the ship to the port.

Use of fire resistant and/or flame retardant materials in cables is known. In particular, special materials may be used for providing one or more fire resistant layers within a cable structure. These materials include, for example, fire resistant and/or flame retardant polymers such as PVC (polyvinylchloride), polymers made fire resistant and/or flame retardant by additives such as aluminium hydroxide or tetrabromo-bisphenol A, ceramifying materials (such as ceramifying silicone resins) or mica. Cables comprising fire resistant and/or flame retardant materials are disclosed, for example, in EP 0 998 747, EP 1 236 209 and WO 2012/032370.

Some applications require cooling the cable (not necessarily fire resistant and/or flame retardant) during its normal operation. This is the case of cables operating in potentially hot environments, such as furnaces or wells, or carrying unusually heavy currents or which need increasing the electrical conductivity thereof.

Systems for cooling cables during their normal operation are known to comprise ducts for circulating a cooling medium and means for making the cooling medium to flow in the ducts.

For example, GB 1 368 497 describes an electric power cable assembly which comprises an electric power cable having a duct along the length thereof for circulating an evaporable refrigerant to cool the cable, an inlet for admitting the liquid refrigerant into the duct and an outlet for removing refrigerant from the duct, a first conduit for connection to the inlet, a second conduit for connection to the outlet, and condensating means arranged to receive refrigerant from the second conduit and deliver liquid refrigerant to the first conduit. When no electric current flows through the cable, the refrigerant is stationary, but when a current flows through the cable, part of the refrigerant is gasified by the heath generated in the cable and flows out from the outlet of the cable, so that the refrigerant is naturally circulated by the difference of the pressure owing to the difference of the specific gravity of fluid in the inlet and outlet side of the refrigerant flow circuit.

### Summary of the invention

Providing fire resistant and flame retardant cables by using the above mentioned fire resistant and/or flame retardant materials has some drawbacks. As to polymeric materials, they can release toxic halogenated gases when the cable reaches their combustion temperature, or the addition of fire resistant and/or flame retardant additive can make the polymeric layer mechanically weaker, besides increasing the overall cost. Ceramifying materials and mica are expensive, as well. The use of mica in particular makes the manufacturing process of the cable discontinuous, and accordingly it disadvantageously increases its duration and cost.

Also, in case a non-fire resistant and/or flame retardant cable needs to be endowed with fire resistant and/or flame retardant properties subsequently to its installation, the whole cable should be replaced.

The Applicant has considered whether an electric power cable assembly disclosed by GB 1 368 497 might be applied for providing a cable with fire resistance properties. The Applicant has however noticed that the assembly of GB 1 368 497 is disadvantageous in that the hydraulic circuit allowing the refrigerant flowing along the cable (comprising the first and second conduits and the condensating means) makes the assembly complex, bulky and costly. In particular, the installation of the assembly is cumbersome, since it requires lying down both the cable and the hydraulic circuit to which the cable shall be connected for allowing circulation of the refrigerant. Hence, the assembly may not be used for applications where narrow spaces are available for the installation of cables.

In view of the above, the Applicant has tackled the problem of providing a fire resistant and flame retardant cable system which overcomes the aforesaid drawbacks or of improving the fire resistant/ flame retardant properties of a cable system.

In particular, the Applicant has tackled the problem of providing a fire resistant and flame retardant cable system, which may be easily installed and maintained and allows making fire resistant/flame retardant an existing cable not endowed with these features.

The Applicant found that a cable system comprising a cable with a cable core may be provided with a conduit comprising a medium and adjacent to the cable or cable core, the medium being kept substantially stationary during cable normal operation and having a boiling temperature lower than the burning temperature of the cable. In case of fire, at the point along the system attached by the flames, the medium reaches its boiling temperature before the cable starts burning. Pressure relief valves provided at the conduit ends (and/or along the conduit) activate to release the pressure caused by the vaporized medium which is so maintained at its boiling point at most. As a consequence, the heat is dispersed, the temperature is maintained at the boiling temperature of the medium until all the medium contained in the conduit has been vaporized and so the burning of the cable layers is delayed. Considering the length of the cable system being generally much greater than the localized area where the flame attacks it, the amount of medium in the system could be high enough as a reservoir to keep cable cool.

In one aspect, the present invention relates to a fire resistant and flame retardant cable system comprising a cable; a conduit provided along a portion of the cable length and in thermal contact thereto; a fluid contained in the conduit and having a boiling temperature lower than the burning temperature of the cable; and at least one pressure relief valve connected to the conduit.

A cable of the system of the invention can be an electric cable, an optical cable or a hybrid (optical/electrical) cable.

According to the present description and claims, as "cable" it is intended a core surrounded by one or more protective layers, including an outer jacket. In case of electric cables, such layers comprise an electrically insulating layer.

According to the present description and claims, as "in thermal contact" it is meant that cable and conduit are in a physical relation such that they mutually exchange energy in form of heat.

The conduit of the present system is preferably made of non-burnable material, more preferably of metal.

The conduit can be provided within or outside the cable jacket. While the case of the conduit provided within the cable jacket is preferred as representing a more mechanically steady system, the case of the conduit provided outside the cable jacket allows the conduit deployment along an already deployed cable, so making it fire resistant and flame retardant.

In the case the conduit is arranged outside the cable jacket, cable and conduit can be held in thermal contact one along the other by suitable fixing means, e.g. tapes, bands, collars or a cable tray.

The conduit and cable of the cable system of the invention can have different lengths and outer diameters. Advantageously, the cable is longer than the conduit. Analogously, the conduit can have an outer diameter greater than the cable outer diameter.

It can be appreciated that the system of the invention is free from apparatus for circulating the fluid. The fluid is substantially static into the conduit under normal cable operation.

The fluid of the system of the invention can fill the conduit by at least 80%. Though the conduit is a substantially closed system, some fluid evaporation could take place after some time from the system deployment. The substantial filling of the conduit is advantageous in that it better guarantees a suitable amount of fluid be maintained over the time. On the other side, when the system is provided in an environment at risk of temperature drops below the fluid freezing point, the filling percentage is preferably lower than 100%. For example, when the fluid is water, the filling percentage shall be not higher than about 90%.

The fluid of the system of the invention can be water or a gel, preferably an aqueous gel. More preferably, the fluid is water.

According to the present description and claims, as "boiling temperature" it is meant the boiling temperature of the fluid as liquid used *per se* or as base of the gel formulation, at the atmospheric pressure. When suitable, the boiling temperature of the fluid can be considered at a different pressure.

According to the present description and claims, in case of electric cable comprising an electrical insulating layer, as "burning temperature of the cable" it is meant the temperature at which the electrical insulating layer burns or otherwise decomposes to an extent such to cease its insulating function. In case of optical cables comprising a protective sheath surrounding the optical fibers, as "burning temperature of the cable" it is meant the temperature at which the protective sheath burns or otherwise decomposes to an extent such to cease its protecting function. In both cases, the temperature is calculated according to international standard such as IEC 60332-1-2 (2004).

Preferably, the system of the invention comprises at least two pressure relief valves, each provided at one end of the conduit. Further pressure relief valves can be provided along the conduit, being advantageous in case of an extended system.

The pressure relief valve (PRV) controls or limits the pressure in the system which builds up in case of fire.

As the cable is exposed to a fire which raises its temperature, also the temperature of the fluid within the conduit increases. When the temperature of the fluid reaches its boiling temperature, the fluid generates a vapour that has volume greater than that of the fluid and gives place to a pressure increase inside the conduit.

The pressure is relieved by allowing the pressurised fluid to flow out of the system. The relief valve is designed or set to open at a predetermined set pressure. When the set pressure is exceeded, the relief valve becomes the "path of least resistance" as the valve is forced to open and a portion of the vapour generated by the fluid is diverted throughout the system. As the vapour is diverted, the heat inside the system will drop. This has a cooling effect on the cable, which delays the detrimental effects of fire over the cable, thereby improving its fire resistance and also its flame retardant properties.

As the vapour flows through the relief valve, it gives place to a pressure drop too, once the pressure reaches a valve's reseating value, the valve will close to be opened again at a new pressure increasing caused by the fire.

Such heat/pressure discharge cycle goes on until the conduit is depleted from the fluid, when the cooling effect of the cable ceases. Considering the cable length exposed to flames is generally a limited portion of the cable system, the amount of fluid in the conduit is sufficient for cooling the cable and maintaining its operation for an advantageous time span, as it will be shown in the following.

In another aspect, the present invention relates to a method for protecting a cable from fire, the method comprising the step of causing a fluid in a conduit provided along at least a portion of the cable length and in thermal contact thereto to boil at a constant pressure.

Preferably, the pressure according the present method is kept constant by causing the fluid to flow out of the conduit.

### Brief description of the drawings

The present invention will become fully clear by reading the following detailed description, to be read by referring to the accompanying drawings, wherein:
- Figure 1 is a longitudinal section view of a cable system according to an embodiment of the present invention;
- Figure 2 is a cross section view of the cable system shown in Figure 1;
- Figure 3 is a cross section view of a cable system according to another embodiment of the present invention; and
- Figure 4 is a graph illustrating the outcome of a fire test on a cable system of the invention compared to a non-fire resistant/flame retardant cable.

### Detailed description of preferred embodiments of the invention

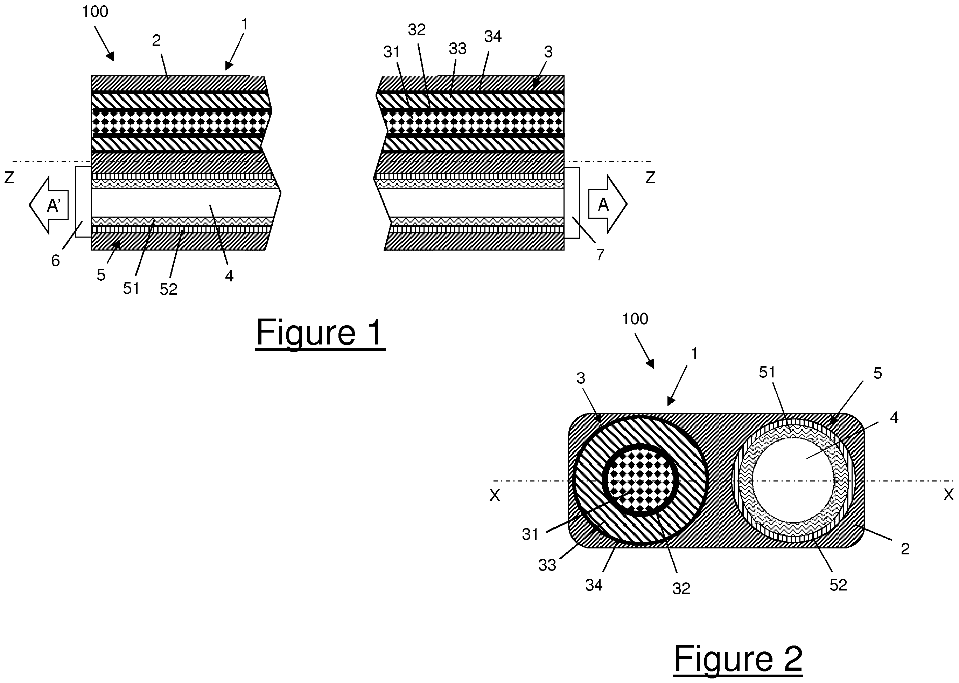

With reference to Figure 1 and 2, a fire resistant and flame retardant cable system 100 according to an embodiment of the present invention will be described in detail. The Figures are not in scale.

The cable system 100 comprises a cable 1. The cable 1 of the embodiment shown in Figures 1 and 2 is an electric cable. This is non-limiting since, according to other embodiments not shown in the drawings, the cable system of the invention may comprise an optical cable or a hybrid cable. Also the structure of the electrical cable 1 shown in Figures 1 and 2 and described herein after is non-limiting. The invention is applicable to any type of cable and cable structure.

The cable 1 comprises a jacket 2. The jacket 2 is made of a polymeric material, for example polyethylene. This polymeric material can be a fire resistant and flame retardant material compliant to regulations IEC 332-1 (1993) and IEC 332-3 (1992). In this case, the cable is already fire resistant/flame retardant and the addition of the conduit of the system of the invention helps to improve these features.

The cable 1 has a longitudinal axis Z. Figure 2 also shows the projection of a longitudinal plane X-X including the longitudinal axis Z. The cable 1 is preferably substantially symmetric relative to the plane X-X.

The cable 1 comprises a conductive core 3. According to embodiments not shown in the drawings, the cable 1 may comprise more than one conductive core.

The conductive core 3 comprises a conductor 31, a first tape 32 wound around the conductor 31, a first insulating layer 33 enclosing the first tape 32 and a second tape 34 wound around the first insulating layer 33.

The conductor 31 is made by a plurality of conductive wires. Each wire is a copper wire, optionally tin-plated.

The first tape 32 can be a polyester tape.

The first insulating layer 33 can be made of a fire resistant and flame retardant material compliant to regulations IEC 332-1 (1993) and IEC 332-3 (1992), for the same reasons already stated above. For example, the insulating material can be an ethylene/propylene polymer, optionally made fire resistant and flame retardant material by the addition of a suitable additive, for example magnesium hydroxide.

The second tape 34 can be a non-woven polyester tape.

The first and second tapes 32 and 34 advantageously ease removal of the first insulating layer 33 for exposing the conductor 31, as required when the cable 1 has to be joined to other electrical components (not shown in the drawings).

The cable system 100 further comprises a conduit 5 that, according to Figure 2, is arranged within the jacket 2 of the cable 1. The conduit 5 is preferably parallel to the conductive core 3. The conductive core 3 and the conduit 5 are preferably aligned, namely their centers lie on the plane X-X.

The conduit 5 comprises a metal tube 51 and a third tape 52 wound around the tube 51.

The metal tube 51 is preferably flexible, more preferably is corrugated. The tube 51 is preferably made of stainless steel. Alternatively, the tube 51 may be made of copper or of aluminium. The third tape 52 preferably is a non-woven polyester tape. The third tape 52 is preferably wound on the tube 51 with an overlap of about 25%.

As from Figure 1, the cable system 100 also comprises at least one pressure relief valve, preferably two pressure relief valves 6, 7. The pressure relief valves are arranged at the opposite ends of the conduit 5, so as to close the conduit 5 at its ends. The conduit 5 may extend substantially along the whole length of the cable 100, as depicted in Figure 1 (actually, the cable 1 is preferably longer than the conduit 5 so that end portions of the cable 1 are provided to extend beyond the ends of the conduit 5 and allow joining the cable 1 e.g. to other cables. This is however not shown in Figure 1, which is only a schematic representation of the system 100). In this case, the valves 6, 7 are placed substantially at the opposite ends of the cable system 100. According to alternative embodiments not shown in the drawings, the conduit 5 may extend along a portion of the cable system 100 and hence the valves may be placed at intermediate positions of the cable system 100. For instance, the conduit 5 may extends along a section of the cable 1 and the valves 6, 7 may be placed where the section is joined together with the adjacent sections of the cable 1.

The conduit 5 contains a fluid 4. The cooling fluid 4 preferably is water or an aqueous gel. The cooling fluid 4 preferably has a boiling temperature lower than the combustion temperature of the cable 1, in particular lower than the combustion temperature of the first insulating layer 33. The fluid 4 is stationary within the conduit 5, since the valves 6 and 7 prevent its spillage from the conduit 5.

When a portion of the cable 1 is exposed to a fire, the temperature of all the cable elements and layers locally increases. Hence, also the temperature of the fluid 4 which fills the conduit 5 locally increases in the cable portion exposed to fire. As the temperature of the fluid 4 locally reaches its boiling temperature (about 100 °C, in case of water), the fluid 4 boils, thereby producing a vapor. The vapor locally generated propagates, together with some fluid, through the conduit 5 parallel to the longitudinal axis Z of the cable 1, until it reaches the valves 6 and 7 at the opposite ends of the conduit 5. The valves 6 and 7 let the vapor escape the conduit 5 (as schematically indicated by the arrows A, A' in Figure 1).

The ebullience and release of the vapor through the valves 6 and 7 advantageously allows locally keeping the temperature of the cable portion subject to fire substantially constant and close to the boiling temperature of the fluid 4, since most of the heat produced by fire is used for boiling the fluid 4, and accordingly does not contribute to heat other layers or elements of the cable 1.

The cooling effect lasts until the conduit 5 comprises some fluid 4 that may boil. In other words, the whole conduit 5 (namely, along the whole cable 1) acts as a reservoir of fluid which may be used, when needed, for locally cooling a portion of the cable affected by fire. The ebullience of the fluid 4 then substantially delays the local increase of temperature of the cable portion subject to fire by a time equal to the time needed for evaporating all the cooling fluid 4 comprised in the conduit 5.

The delayed heating of the cable 1 advantageously results in an improved fire resistance of the cable 1, since burning of the cable materials is delayed. Further, also the flame propagation distance along the cable 1 is advantageously reduced.

The cable system 100 has a number of advantages.

First of all, as explained above, the fluid is stationary and its cooling effect is obtained by its ebullience and vapor release through the pressure relief valves. Hence, no circulation of the liquid is required for obtaining the cooling effect. The system therefore does not include any hydraulic circuit suitable for pumping the fluid, and is accordingly simple and easy to install.

Further, the cable 1 does not need to comprise any fire resistant or flame retardant material. A previously laid cable can therefore be made fire resistant/flame retardant by providing it with conduit and valves according to the system of the invention.

Further, in case of fire, the cable system reduces the release in the environment of polluting gas since, until the conduit comprises some fluid, the cable system releases a limited amount of gas coming from the cable burning, because the burning area is limited.

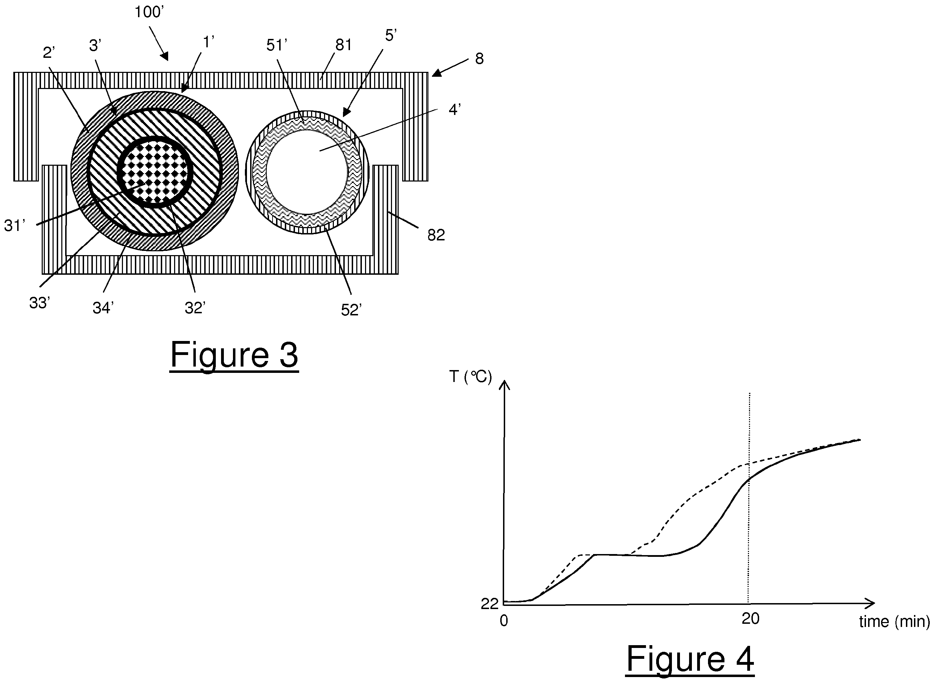

Figure 3 shows a cable system 100' according to an alternative embodiment. In this embodiment, the cable system 100' comprises a cable 1' in turn comprising a jacket 2' and a conductive core 3'. The cable system 100' further comprises a conduit 5' containing a fluid 4'. The structure of the cable core 3' is preferably similar to that of the cable core 3 shown in Figures 1 and 2, while the structure of the conduit 5' is preferably similar to that of the conduit 5 shown in Figures 1 and 2. However, differently from the embodiment of Figures 1 and 2, the conduit 5' is arranged outside the jacket 2', while still being in thermal contact with the jacket 2'. The conduit 5' and the cable 1' are kept in side-by-side relationship by a cable tray 8 made of two tray shells 81, 82 e.g. of aluminum. Alternatively, the conduit 5' may be fixed to the cable 1' by means of suitable fixing means, e.g. tapes, bands or collars. The thermal contact between the cable 1' and the conduit 5' advantageously allows improving the fire resistance and the flame retardant properties of the cable 1' (or, at least, of the cable portion in thermal contact with the conduit 5'), as explained above.

In the embodiment of Figures 1 and 2, both ends of the conduit 5 are closed by valves 6, 7. The conduit 5 as such then acts as a reservoir of fluid for delaying heating of a cable portion subject to fire. Accordingly, the time by which the cable heating is delayed depends on the capacity of the conduit 5. As a consequence, the diameter and the length of conduit 5 can be maximized for containing a greater amount of fluid. At the same time, the diameter and length of the conduit 5 can be maintained within limits imposed by the environment where the cable system 100 is deployed, that can be limited in space, nevertheless the amount of fluid contained in the conduit can effectively delay the cable burning because the cable length exposed to flames is generally a limited portion of the cable system.

According to other embodiments not shown in the drawings, the conduit may be closed by a valve at one end only, the other end of the conduit being connected to an external reservoir supplying the fluid, so that the fluid is stationary within the conduit when the cable is not subject to fire. As the fluid comprised within the conduit boils and the vapor is released from the conduit through the valve, fresh fluid is supplied in the conduit by the external reservoir. Hence, according to such embodiments, the time by which the cable heating is delayed advantageously depends on the total amount of fluid which the external reservoir or hydric system may supply to the conduit, which might be much larger than the capacity of the conduit. The cable heating may accordingly be delayed by a much longer time, such time being independent of the conduit capacity.

The cable system of the invention was tested to prove the efficiency thereof, in particular two electric cable systems A and B similar to the cable system 100 shown in Figures 1 and 2 were tested. Each cable system A and B comprised an electric cable similar to cable 1 and a conduit similar to conduit 5 and extending substantially along the whole length of the cable. The cable systems A and B were positioned vertically and parallel one another. Each cable system was 3.5 m long. In cable system A the conduit was filled with water, while in cable system B the conduit was empty. The cable comprised in each cable system A and B was provided with a respective thermal probe to measure the temperature inside the cable. The conduit comprised in cable system A had the bottom end sealed and the upper end open. Cable system A and cable system B were simultaneously ignited by a burner.

At the end of the test cable system A resulted visually much less burnt than cable system B.

Figure 4 is a graph with temperature in ordinate (°C, the origin value being a room temperature of 22°C) and time in abscissae (minutes) and shows the temperature inside the cable of cable system A (solid curve) and the cable of cable system B (dashed curve). At the beginning of the test, the temperature inside the cable of system A increased slower than inside the cable of system B, then it kept a plateau for longer and reached a lower value at the test end (at the 20^{th} minute, marked by the dotted vertical line) when the burner is stopped.

Even if the conduit had limited dimension in comparison with the flames originated by the burner, nonetheless its thermal contact provided a temperature inside cable A remarkably lower than that inside cable B.

## Claims

1. A fire resistant and flame retardant cable system (100, 100') comprising:
- a cable (1, 1');
- a conduit (5, 5') provided along a portion of said cable (1, 1') and in thermal contact thereto;
- a fluid (4, 4') contained in said conduit (5, 5') and having a boiling temperature lower than a burning temperature of said cable (1, 1'); and
- at least one pressure relief valve (6, 7) connected to the conduit (5, 5').

2. The system (100, 100') according to claim 1, wherein said cable (1, 1') is an electric cable, an optical cable or a hybrid optical/electrical cable.

3. The system (100, 100') according to claim 1 or 2, wherein said cable (1, 1') comprises a conductive core (3, 3') and a jacket (2, 2') surrounding said conductive core (3, 3').

4. The system (100) according to claim 3, wherein said conduit (5) is arranged within said jacket (2).

5. The system (100') according to claim 3, wherein said conduit (5') is arranged outside said jacket (2').

6. The system (100, 100') according to any of the preceding claims, wherein said cable (1, 1') and said conduit (5, 5') have substantially the same length.

7. The system (100, 100') according to any of the preceding claims, wherein said fluid (4, 4') substantially fills said conduit (5, 5').

8. The system (100, 100') according to any of the preceding claims, wherein said fluid (4, 4') comprises water or an aqueous gel.

9. The system (100, 100') according to any of the preceding claims, wherein it comprises two pressure relief valves (6, 7), each provided at one end of said conduit (5, 5').

10. The system (100, 100') according to any of the preceding claims, wherein said conduit (5, 5') is made of a non-burnable material.

11. The system (100, 100') according to any of the preceding claims, wherein said conduit (5, 5') is made of metal.

12. The system (100, 100') according to any of the preceding claims, wherein said conduit (5, 5') comprises a corrugated metal tube (51, 51').

13. A method for protecting a cable (1, 1') from fire, the method comprising the step of causing a fluid (4, 4') in a conduit (5, 5') provided along at least portion of said cable (1, 1') and in thermal contact thereto to boil at a constant pressure.

14. The method according to claim 13, wherein said pressure is kept constant by causing said fluid (4, 4') to flow out of said conduit (5, 5').

## Patentansprüche

1. Feuerfestes und flammhemmendes Kabelsystem (100, 100'), umfassend:
ein Kabel (1, 1');
eine Leitung (5, 5'), die entlang einem Abschnitt des Kabels (1, 1') angeordnet ist und in thermischem Kontakt damit steht;
ein Fluid (4, 4'), das in der Leitung (5, 5') enthalten ist und eine Sidetemperatur aufweist, die niedriger als eine Brenntemperatur des Kabels (1, 1') ist; und
mindestens ein Überdruckventil (6, 7), das mit der Leitung (5, 5') verbunden ist.

2. System (100, 100') nach Anspruch 1, wobei das Kabel (1, 1') ein elektrisches Kabel, ein optisches Kabel oder ein optisches/elektrisches Hybridkabel ist.

3. System (100, 100') nach Anspruch 1 oder 2, wobei das Kabel (1, 1') einen leitfähigen Kern (3, 3') und einen Mantel (2, 2') umfasst, der den leitfähigen Kern (3, 3') umgibt.

4. System (100) nach Anspruch 3, wobei die Leitung (5) in dem Mantel (2) angeordnet ist.

5. System (100') nach Anspruch 3, wobei die Leitung (5') außerhalb des Mantels (2') angeordnet ist.

6. System (100, 100') nach einem der vorhergehenden Ansprüche, wobei das Kabel (1, 1') und die Leitung (5, 5') im Wesentlichen dieselbe Länge aufweisen.

7. System (100, 100') nach einem der vorhergehenden Ansprüche, wobei das Fluid (4, 4') die Leitung (5, 5') im Wesentlichen füllt.

8. System (100, 100') nach einem der vorhergehenden Ansprüche, wobei das Fluid (4, 4') Wasser oder ein wässriges Gel umfasst.

9. System (100, 100') nach einem der vorhergehenden Ansprüche, wobei es zwei Überdruckventile (6, 7) umfasst, die jeweils an einem Ende der Leitung (5, 5') angeordnet sind.

10. System (100, 100') nach einem der vorhergehenden Ansprüche, wobei die Leitung (5, 5') aus einem nichtbrennbaren Material besteht.

11. System (100, 100') nach einem der vorhergehenden Ansprüche, wobei die Leitung (5, 5') aus Metall besteht.

12. System (100, 100') nach einem der vorhergehenden Ansprüche, wobei die Leitung (5, 5') ein gewelltes Metallrohr (51, 51') umfasst.

13. Verfahren zum Schützen eines Kabels (1, 1') vor Feuer, wobei das Verfahren den Schritt zum Veranlassen eines Fluids (4, 4') in einer Leitung (5, 5'), die entlang mindestens einem Abschnitt des Kabels (1, 1') angeordnet ist und in thermischen Kontakt damit steht, dazu umfasst, bei einem konstanten Druck zu sieden.

14. Verfahren nach Anspruch 13, wobei der Druck dadurch konstant gehalten wird, dass das Fluid (4, 4') dazu veranlasst wird, aus der Leitung (5, 5') herauszufließen.

## Revendications

1. Système de câbles résistant au feu et ignifuge (100, 100') comprenant :
- un câble (1, 1') ;
- un conduit (5, 5') présent le long d'une partie dudit câble (1, 1') et en contact thermique avec celui-ci ;
- un fluide (4, 4') contenu dans ledit conduit (5, 5') et ayant une température d'ébullition inférieure à une température de combustion dudit câble (1, 1') ; et
- au moins une soupape de retour (6, 7) reliée au conduit (5, 5').

2. Système (100, 100') selon la revendication 1, dans lequel ledit câble (1, 1') est un câble électrique, un câble optique ou un câble optique/électrique hybride.

3. Système (100, 100') selon la revendication 1 ou 2, dans lequel ledit câble (1, 1') comprend un noyau conducteur (3, 3') et un revêtement (2, 2') entourant ledit noyau conducteur (3, 3').

4. Système (100) selon la revendication 3, dans lequel ledit conduit (5) est agencé à l'intérieur dudit revêtement (2).

5. Système (100') selon la revendication 3, dans lequel ledit conduit (5') est agencé à l'extérieur dudit revêtement (2').

6. Système (100, 100') selon l'une quelconque des revendications précédentes, dans lequel ledit câble (1, 1') et ledit conduit (5, 5') ont sensiblement la même longueur.

7. Système (100, 100') selon l'une quelconque des revendications précédentes, dans lequel ledit fluide (4, 4') rempli sensiblement ledit conduit (5, 5').

8. Système (100, 100') selon l'une quelconque des revendications précédentes, dans lequel ledit fluide (4, 4') comprend de l'eau ou un gel aqueux.

9. Système (100, 100') selon l'une quelconque des revendications précédentes, dans lequel il comprend deux soupapes de retour (6, 7), présentes chacune sur une extrémité dudit conduit (5, 5').

10. Système (100, 100') selon l'une quelconque des revendications précédentes, dans lequel ledit conduit (5, 5') est fait d'un matériau non combustible.

11. Système (100, 100') selon l'une quelconque des revendications précédentes, dans lequel ledit conduit (5, 5') est fait de métal.

12. Système (100, 100') selon l'une quelconque des revendications précédentes, dans lequel ledit conduit (5, 5') comprend un tube métallique ondulé (51, 51').

13. Procédé pour protéger un câble (1, 1') contre le feu, le procédé comprenant l'étape consistant à amener un fluide (4, 4') dans un conduit (5, 5') présent le long d'au moins une partie dudit câble (1, 1') et en contact thermique avec celui-ci pour bouillir à une pression constante.

14. Procédé selon la revendication 13, dans lequel ladite pression est gardée constante en amenant ledit fluide (4, 4') à s'écouler hors dudit conduit (5, 5').
